Europäisches Patentamt

European Patent Office

Office européen des brevets

(11) Veröffentlichungsnummer: **0 023 693**
A2

(12) **EUROPÄISCHE PATENTANMELDUNG**

(21) Anmeldenummer: **80104432.2**

(22) Anmeldetag: **28.07.80**

(51) Int. Cl.³: **G 06 F 1/00**

(30) Priorität: **02.08.79 DE 2931417**

(43) Veröffentlichungstag der Anmeldung: **11.02.81**
**Patentblatt 81/6**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Gutberlet, Hans, Auestrasse 10, D-6419 Burghaun 3 (DE)**

(54) **Schaltungsanordnung zum gezielten Unterbrechen des Funktionsablaufs einer Steuerschaltung.**

(57) Die Erfindung bezieht sich auf eine Schaltungsanordnung zum gezielten Unterbrechen eines Funktionsablaufs in einer taktgesteuerten Steuerschaltung (ST), die mindestens teilweise aus digitalen Schaltkreisen gebildet ist. Zwischen einem Taktgeber (TG) und der Steuerschaltung (ST) ist eine Schaltstufe (S) angeordnet, die der Steuerschaltung (ST) zugeführte Taktimpulse (T2) sperrt, wenn nach dem Auftreten eines Sperrsignals (SP) die Steuerschaltung (ST) ein Zustandssignal (ZU) abgibt, das einen vorgegebenen Zustand der Steuerschaltung (ST) kennzeichnet. Der vorgegebene Zustand ist beispielsweise ein Ruhezustand, in dem die Steuerschaltung (ST) möglichst wenig Energie benötigt.

SIEMENS AKTIENGESELLSCHAFT          Unser Zeichen

Berlin und München                  VPA 79 P 2 3 5 6 EUR

Schaltungsanordnung zum gezielten Unterbrechen eines
Funktionsablaufs einer Steuerschaltung.

Die Erfindung bezieht sich auf eine Schaltungsanordnung zum gezielten Unterbrechen eines Funktionsablaufs in einer Steuerschaltung, bei der die Steuerschaltung mindestens teilweise aus digitalen Schaltkreisen gebildet wird, denen in einem Taktgeber erzeugte Taktimpulse zugeführt werden und bei der die Steuerschaltung zeitlich nacheinander nach jeweils einer Mehrzahl von Taktimpulsen einen vorgegebenen Zustand einnimmt.

Bei der Verwendung einer taktgesteuerten Steuerschaltung, die mindestens teilweise aus digitalen Schaltkreisen gebildet wird, ist es häufig erwünscht, den Funktionsablauf in der Steuerschaltung an einer bestimmten Stelle zu unterbrechen. Beispielsweise soll in einem Störungsfall sichergestellt werden, daß die Steuerschaltung keine Signale über Schnittstellenleitungen abgibt oder die Steuerschaltung soll in einen Ruhezustand eingestellt werden, in dem sie möglichst wenig Energie verbraucht.

Ret 1 Ram /26.7.1979

Falls die Steuerschaltung unter Verwendung eines Mikroprozessors ausgebildet ist, wäre es denkbar, den Mikroprozessor nach dem Auftreten eines die Unterbrechung auslösenden Sperrsignals durch einen Programmsprung in eine Programmschleife zu bringen, die einem Ruhezustand entspricht. Wenn die letzte Adresse im Programmspeicher vor dem Programmsprung abgespeichert wurde, kann der Mikroprozessor das vor dem Auftreten des Sperrsignals begonnene Programm nach dem Ende des Sperrsignals wieder an dieser Stelle fortsetzen. Der Mikroprozessor ist in diesem Fall auch während des äußeren Ruhezustands in Betrieb, so daß die Steuerschaltung weiterhin verhältnismäßig viel Energie benötigt. Außerdem erfordert ein Rücksprung aus der Programmschleife an die entsprechende Stelle im Programm eine verhältnismäßig große Zeitdauer.

Der Erfindung liegt daher die Aufgabe zugrunde, eine Schaltungsanordnung anzugeben, mit der auf einfache Weise ein Funktionsablauf in einer Steuerschaltung bei einem vorgegebenen Zustand der Steuerschaltung unterbrochen werden kann.

Erfindungsgemäß wird die Aufgabe bei der Schaltungsanordnung der eingangs genannten Art dadurch gelöst, daß im Verbindungsweg zwischen dem Taktgeber und der Steuerschaltung eine Schaltstufe vorgesehen ist, an der ein die Unterbrechung auslösendes Sperrsignal und ein den vorgegebenen Zustand kennzeichnendes Zustandssignal anliegen und das die Taktimpulse phasenrichtig sperrt, wenn die Steuerschaltung nach dem Auftreten des Sperrsignals den vorgegebenen Zustand einnimmt.

Die Schaltungsanordnung gemäß der Erfindung hat den Vorteil, daß die Steuerschaltung gezielt in einem vorgegebenen Zustand angehalten werden kann und sich damit ein statischer Zustand in der Steuerschaltung einstellt.
Als vorgegebener Zustand kommt beispielsweise der Zustand
in Betracht, in dem die Steuerschaltung möglichst wenig
Energie benötigt. Dieser Zustand kann empirisch ermittelt
werden oder durch Simulationen rechnerisch ermittelt werden. Durch das Sperren der Taktimpulse ist die Unterbrechung bei der Verwendung eines Mikroprozessors in der
Steuerschaltung nicht an den Abschluß eines Verarbeitungszyklus gebunden. Beispielsweise kann ein Verarbeitungszyklus, der durch die Taktimpulse gesteuert wird, an einer
beliebigen Stelle angehalten werden. Der augenblickliche
Zustand wird dann so lange eingefroren, bis nach Ende
des Sperrsignals wieder Taktimpulse zur Steuerschaltung
durchgeschaltet werden.

Die Schaltungsanordnung erfordert insbesondere dann einen
geringen Aufwand, wenn die Schaltstufe ein Flipflop enthält, an dessen Dateneingang das Zustandssignal anliegt,
an dessen Takteingang die Taktimpulse anliegen, an dessen
Rücksetzeingang ein dem Sperrsignal zugeordnetes Signal
anliegt und wenn ein binäres Verknüpfungsglied vorgesehen ist, dessen erster Eingang mit dem Ausgang des Flipflops verbunden ist, an dessen zweitem Eingang die Taktimpulse anliegen und das die Taktimpulse zur Steuerschaltung durchschaltet. Dabei ist es günstig, wenn als binäres
Verknüpfungsglied ein NOR-Glied vorgesehen ist.

Falls das Sperrsignal asynchron zu den Taktimpulsen auftritt, ist es von Vorteil, wenn ein weiteres Flipflop
vorgesehen ist, an dessen Dateneingang das Sperrsignal
anliegt, an dessen Takteingang die Taktimpulse anliegen
und dessen Ausgang mit dem Rücksetzeingang des Flipflops
verbunden ist.

Zur Erzeugung des Zustandssignals ist es zweckmäßig, wenn die Steuerschaltung mindestens ein binäres Verknüpfungsglied enthält, das das Zustandssignal abgibt, wenn an ihren Eingängen den vorgegebenen Zustand kennzeichnende Signale anliegen.

Die Unterbrechung des Funktionsablaufs in der Steuerschaltung erweist sich in einem Störungsfall insbesondere dann als vorteilhaft, wenn die Steuerschaltung das Zustandssignal abgibt, wenn sie einen Zustand einnimmt, in dem sie wenig Energie benötigt.

Falls die Steuerschaltung einen Mikroprozessor enthält, ist es von Vorteil, wenn dem vorgegebenen Zustand ein zyklisch auftretender Verarbeitungsschritt entspricht, bei dem der Mikroprozessor besonders wenig Energie benötigt.

Ein mit den Merkmalen der Erfindung ausgestattetes Ausführungsbeispiel der Schaltungsanordnung wird im folgenden anhand von Zeichnungen beschrieben.
Es zeigen:
Fig. 1 ein Blockschaltbild der Schaltungsanordnung,
Fig. 2 ein Schaltbild einer Schaltstufe,
Fig. 3 Zeitdiagramme von Signalen an verschiedenen
       Punkten an der Schaltstufe.

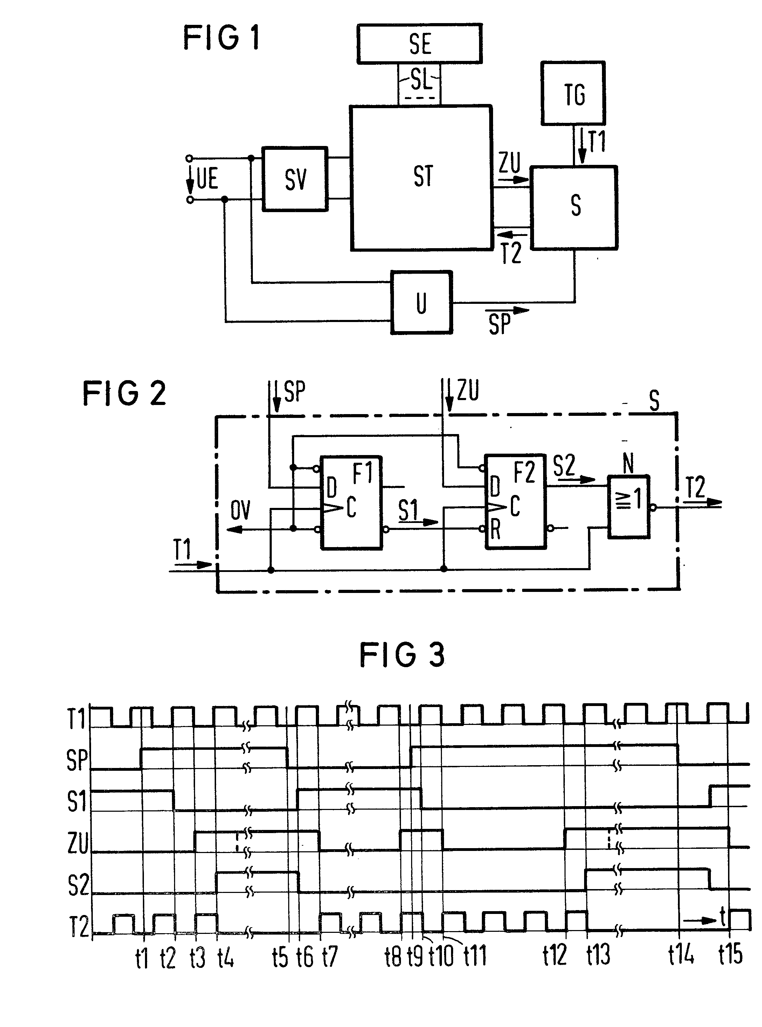

Bei der in Fig. 1 dargestellten Schaltungsanordnung wird eine Steuerschaltung ST durch eine Stromversorgungseinrichtung SV mit einer Betriebsspannung versorgt. Die Stromversorgungseinrichtung SV enthält einen Energiespeicher, beispielsweise in Form eines Kondensators mit verhältnismäßig großer Kapazität. Die Betriebsspannung wird aus einer Eingangsspannung UE erzeugt. Die Steuerschaltung ST ist über Schnittstellenleitungen SL mit Steuereinheiten SE verbunden. Die Steuerschaltung ST und die Steuereinheiten SE sind beispielsweise Bestandteile eines Modems, der Daten und Steuersignale zwischen einem angeschlossenen Endgerät und einer Fernsprechleitung überträgt. Die Steuerschaltung ST ist taktgesteuert und sie enthält digitale Schaltkreise und gegebenenfalls einen oder mehrere Mikroprozessoren.

Der Steuerschaltung ST werden in einem Taktgeber TG erzeugte Taktimpulse T1 über eine Schaltstufe S als Taktimpulse T2 zugeführt. Nach jedem Taktimpuls nimmt die Steuerschaltung ST einen bestimmten Zustand ein. Diese Zustände können sich nach jeweils einer vorgegebenen Anzahl von Taktimpulsen T2 zyklisch wiederholen.

Die Steuerschaltung gibt an die Schaltstufe S ein Zustandssignal ZU ab, das einen bestimmten vorgegebenen Zustand der Steuerschaltung ST kennzeichnet. Dieser Zustand stellt beispielsweise einen bestimmten Ruhezustand dar oder einen Zustand, in dem die Steuerschaltung möglichst wenig Energie von der Stromversorgungseinheit SV benötigt. Die Schaltstufe S sperrt die der Steuerschaltung ST zugeführten Taktimpulse T2, wenn ein Sperrsignal SP auftritt und anschließend von der Steuerschaltung ST ein Zustandssignal ZU erzeugt wird. Das Sperrsignal SP kann asynchron zu den Taktimpulsen T1 oder T2 sein und es wird beispielsweise in einem Störungsfall erzeugt oder wenn die Eingangsspannung UE kurzzeitig unterbrochen ist, so daß die Steuerschaltung ST zwar infolge des Energiespeichers in der Stromversorgungseinrichtung SV mit Energie versorgt werden kann, jedoch für eine länger andauernde Unterbrechung besondere Vorkehrungen getroffen werden müssen.

Falls die Eingangsspannung UE kurzzeitig absinkt oder unterbrochen wird, erzeugt eine Überwachungsschaltung U das Sperrsignal SP und stellt in der Steuerschaltung ST einen Zustand ein, in dem diese möglichst wenig Energie benötigt. Ein in der Steuerschaltung ST gerade bearbeiteter Funktionsablauf wird dann gezielt an derjenigen Stelle unterbrochen, an der möglichst wenig Energie benötigt wird. In diesem Fall wird dem Energiespeicher in der Stromversorgungseinrichtung SV wenig Energie entnommen, so daß eine größere Unterbrechung der Eingangsspannung UE zugelassen werden kann. Wenn die Unterbrechung der Eingangsspannung UE beendet ist, schaltet die Schaltstufe S wieder Taktimpulse T2 zur Steuerschaltung ST durch und der Funktionsablauf in der Steuerschaltung ST wird an derjenigen Stelle fortgesetzt, an der er zuvor unterbrochen wurde.

Zum Erzeugen des Zustandssignals ZU ist in der Steuerschaltung ST beispielsweise ein binäres Verknüpfungsglied vorgesehen, an dessen Eingängen Signale anliegen, die bei dem vorgegebenen Zustand bestimmte Binärwerte annehmen. Am Ausgang des binären Verknüpfungsglieds wird dann das Zustandssignal ZU nur dann abgegeben, wenn der vorgegebene Zustand auftritt. Falls die Steuerschaltung ST unter Verwendung eines Mikroprozessors aufgebaut wurde, können auch bestimmte, vom Mikroprozessor während eines Verarbeitungszyklus abgegebene Signale als Zustandssignale ZU verwendet werden. Vorzugsweise wird auch hier als Zustandssignal ZU ein Signal verwendet, bei dem der Mikroprozessor möglichst wenig Energie benötigt.

Die in Fig. 2 dargestellte Schaltstufe S enthält zwei Flipflops F1 und F2 und ein als NOR-Glied ausgebildetes binäres Verknüpfungsglied N. Die Funktionsweise der Schaltstufe S wird im folgenden zusammen mit den in Fig. 3 dargestellten Zeitdiagrammen beschrieben.

Bei den in Fig. 3 dargestellten Zeitdiagrammen sind in Abszissenrichtung die Zeit t und in Ordinatenrichtung die Momentanwerte von Signalen an verschiedenen Punkten der Schaltstufe S dargestellt. Der S

Der Schaltstufe S werden die in dem Taktgeber TG erzeugten Taktimpulse T1 konstanter Folgefrequenz zugeführt. Wenn zum Zeitpunkt t1 das Sperrsignal SP, beispielsweise asynchron zu den Taktimpulsen T1 auftritt, wird mit der ansteigenden Flanke des nächstfolgenden Taktimpulses T1 zum Zeitpunkt t2 das Flipflop F1 gesetzt, da das Sperrsignal SP an seinem Dateneingang D1 und die Taktimpulse T1 an seinem Takteingang C1 anliegen. Mit dem Setzen des Flipflops F1 wird an seinem invertierenden Ausgang ein taktsynchrones Signal S1 abgegeben, das zum Zeitpunkt t2 den Binärwert O annimmt.

Unter der Annahme, daß die der Steuerschaltung ST zugeführten Taktimpulse T2 gegenüber den vom Taktgeber TG erzeugten Taktimpulsen T1 invertiert sind, ändern sich die Zustände in der Steuerschaltung ST jeweils mit den fallenden Flanken der Taktimpulse T1.

Wenn zum Zeitpunkt t3 das Zustandssignal ZU den Binärwert 1 annimmt und damit das Auftreten des vorgegebenen Zustands anzeigt, wird mit der ansteigenden Flanke des nächstfolgenden Taktimpulses T1 das Flipflop F2 zum Zeitpunkt t4 gesetzt. Das Zustandssignal ZU liegt am Dateneingang D2 des Flipflops F2 an, während die Taktimpulse T1 am Takteingang C2 anliegen und das Signal S1 am Rücksetzeingang R anliegt. Da das Signal S1 zum Zeitpunkt t2 den Binärwert O angenommen hat, wurde zu diesem Zeitpunkt die Rücksetzung des Flipflops F2 aufgehoben und es konnte zum Zeitpunkt t4 gesetzt werden.

Das Flipflop F2 gibt an seinem Ausgang das Signal S2 an das NOR-Glied N ab, das dieses mit den Taktimpulsen T1 verknüpft und die Taktimpulse T2 erzeugt. Da das Signal S2 zum Zeitpunkt t4 den Binärwert 1 angenommen hat, werden nach diesem Zeitpunkt keine Taktimpulse T2 abgegeben, so daß die Steuerschaltung ST in dem durch das Zustandssignal ZU gekennzeichneten Zustand so lange verharrt, bis wieder Taktimpulse T2 erzeugt werden.

Zum Zeitpunkt t5 wird angenommen, daß das Sperrsignal SP beendet wird. Das Flipflop F1 wird damit mit dem nächstfolgenden Taktimpuls T1 wieder zurückgesetzt. Mit dem Zurücksetzen nimmt das Signal S1 den Binärwert 1 an, so daß unmittelbar danach auch das Flipflop F2 wieder zurückgesetzt wird. Das Signal S2 nimmt damit wieder den Binärwert 0 an und das NOR-Glied N schaltet wieder Taktimpulse T1 als Taktimpulse T2 zur Steuerschaltung ST durch, so daß der zuvor unterbrochene Funktionsablauf wieder fortgesetzt werden kann. Der vorgegebene Zustand, der nach dem Zeitpunkt t4 im Normalbetrieb an der gestrichelt dargestellten Stelle beendet gewesen wäre, ist infolge der Unterbrechung erst zum Zeitpunkt t7 beendet.

Zum Zeitpunkt t8 tritt wieder das Zustandssignal ZU auf. Es wird angenommen, daß zum Zeitpunkt t9 erneut das Sperrsignal SP auftritt, während das Zustandssignal ZU noch vorhanden ist. Infolge des Sperrsignals SP wird das Flipflop F1 zum Zeitpunkt t10 gesetzt und das Flipflop F2 wird damit freigegeben. Zum Zeitpunkt t11 ist das Zustandssignal ZU jedoch beendet, so daß das Flipflop F2 nicht gesetzt werden kann. Damit erfolgt auch keine Sperrung der Taktimpulse T2.

Zum Zeitpunkt t12 tritt nach einer der Zeitdifferenz zwischen den Zeitpunkten t12 und t3 entsprechenden Periodendauer wieder das Zustandssignal ZU auf. Nun kann mit dem nächstfolgenden Taktimpuls T1 zum Zeitpunkt t13 das Flipflop F2 gesetzt werden, so daß ein Signal S2 erzeugt wird

0023693

und in ähnlicher Weise wie nach dem Zeitpunkt t4 Taktimpulse T2 gesperrt werden.

Zum Zeitpunkt t14 wird das Sperrsignal SP wieder beendet
und bis zum Zeitpunkt t15 wiederholen sich die gleichen
Vorgänge wie zwischen den Zeitpunkten t5 und t7.

7 Patentansprüche
3 Figuren

Patentansprüche

1. Schaltungsanordnung zum gezielten Unterbrechen eines Funktionsablaufs in einer Steuerschaltung, bei der die Steuerschaltung mindestens teilweise aus digitalen Schaltkreisen gebildet wird, denen in einem Taktgeber erzeugte Taktimpulse zugeführt werden und bei der die Steuerschaltung zeitlich nacheinander nach jeweils einer Mehrzahl von Taktimpulsen einen vorgegebenen Zustand einnimmt, d a d u r c h  g e k e n n z e i c h n e t, daß im Verbindungsweg zwischen dem Taktgeber (TG) und der Steuerschaltung (ST) eine Schaltstufe (S) vorgesehen ist, an der ein die Unterbrechung auslösendes Sperrsignal (SP) und ein den vorgegebenen Zustand kennzeichnendes Zustandssignal (ZU) anliegen und das die Taktimpulse (T2) phasenrichtig sperrt, wenn die Steuerschaltung (ST) nach dem Auftreten des Sperrsignals (SP) den vorgegebenen Zustand (ZU) annimmt.

2. Schaltungsanordnung nach Anspruch 1, d a d u r c h  g e k e n n z e i c h n e t, daß die Schaltstufe (S) ein Flipflop (F2) enthält, an dessen Dateneingang (D) das Zustandssignal (ZU) anliegt, an dessen Takteingang (C) die Taktimpulse (T1) anliegen, an dessen Rücksetzeingang (R) ein dem Sperrsignal (SP) zugeordnetes Signal (S1) anliegt und ein binäres Verknüpfungsglied (N) enthält, dessen erster Eingang mit dem Ausgang des Flipflops (F2) verbunden ist, an dessen zweitem Eingang die Taktimpulse (T1) anliegen und das die Taktimpulse (T2) zur Steuerschaltung (ST) durchschaltet.

3. Schaltungsanordnung nach Anspruch 2, d a d u r c h  g e k e n n z e i c h n e t, daß als binäres Verknüpfungsglied(N) ein NOR-Glied vorgesehen ist.

4. Schaltungsanordnung nach einem der Ansprüche 1 bis 3, bei dem das Sperrsignal asynchron zu den Taktimpulsen auftritt, d a d u r c h   g e k e n n z e i c h n e t, daß ein weiteres Flipflop (F1) vorgesehen ist, an dessen Dateneingang (D) das Sperrsignal (SP) anliegt, an dessen Takteingang (C) die Taktimpulse (T1) anliegen und dessen Ausgang mit dem Rücksetzeingang (R) des Flipflops (F2) verbunden ist.

5. Schaltungsanordnung nach einem der Ansprüche 1 bis 4, d a d u r c h   g e k e n n z e i c h n e t, daß die Steuerschaltung (ST) mindestens ein binäres Verknüpfungsglied enthält, das das Zustandssignal (ZU) abgibt, wenn an ihren Eingängen den vorgegebenen Zustand kennzeichnende Signale anliegen.

6. Schaltungsanordnung nach einem der Ansprüche 1 bis 5, d a d u r c h   g e k e n n z e i c h n e t, daß die Steuerschaltung (ST) das Zustandssignal (ZU) abgibt, wenn sie einen Zustand einnimmt, in dem sie wenig Energie benötigt.

7. Schaltungsanordnung nach einem der Ansprüche 1 bis 6, d a d u r c h   g e k e n n z e i c h n e t, daß die Steuerschaltung (ST) einen Mikroprozessor enthält, bei dem der vorgegebene Zustand einem zyklisch auftretenden Verarbeitungsschritt entspricht, bei dem der Mikroprozessor besonders wenig Energie benötigt.

0023693

1/1

FIG 1

FIG 2

FIG 3